# EUROPEAN PATENT APPLICATION

(11) **EP 4 570 075 A1**
(43) Date of publication of application: **18.06.2025**
(21) Application number: 24217674.1
(22) Date of filing: 05.12.2024
(51) Int. Cl.: A23G 1/00, A23G 1/20, A23G 3/34, A23G 3/02, A23G 9/22, A23G 9/28

(54) **MACHINE FOR PRODUCING A FILLED FOODSTUFF PRODUCT**

(30) Priority: 15.12.2023 IT 202300026808
(71) Applicant: Selmi S.r.l., 12042 BRA (CN) (IT)
(72) Inventor: SELMI, Paolo, I-12042 BRA (CN) (IT)
(74) Representative: Buzzi, Notaro & Antonielli d'Oulx S.p.A.

(57) **Abstract**

Described herein is a machine for producing a filled foodstuff product, comprising:
- a first container (2) for receiving a first foodstuff material;
- a second container (4) for receiving a second foodstuff material, or else a connection unit for connecting a second container, which contains the second material, to the machine;
- a dispensing unit (6) comprising at least one dispensing nozzle (14), wherein the dispensing nozzle comprises a first outlet (14A) and a second outlet (14B) that is external to the first outlet (14A) and surrounds it;
- at least one valve unit (8, 12) for controlling a flow of the first material to the first outlet (14A) and a flow of the second material to the second outlet (14B); and
- a control unit (90) for governing the at least one valve unit (8, 12) so as to generate, either individually or simultaneously, a flow of material through the first outlet (14A) and a flow of material through the second outlet (14B).

The machine is characterized in that that it comprises a thermal-conditioning system (50) for selectively cooling or else heating an inner surface (S) of the first container (2) so as to cool or heat the first material contained in the first container.

## Description

The present invention relates to a machine for producing a filled foodstuff product, of the type comprising:
- a first container for receiving a first foodstuff material;
- a second container for receiving a second foodstuff material, or else a connection unit for connecting a second container, which contains a second foodstuff material, to the machine;
- a dispensing unit comprising at least one dispensing nozzle, wherein the dispensing nozzle comprises a first outlet and a second outlet, which is external to the first outlet and surrounds it;
- at least one valve unit for controlling a flow of the first material to the first outlet and a flow of the second material to the second outlet; and
- a control unit for governing the at least one valve unit so as to generate, either individually or simultaneously, a flow of the first material through the first outlet and a flow of the second material through the second outlet.

Machines of the type referred to above are, for example, so-called one-shot machines for producing filled foodstuff products.

In general, the machines of the type in question are characterized in that they produce the filled product in a single delivery step in which the material that comes to constitute the outer shell of the product and the material that comes to constitute its filling are delivered simultaneously, at least for a given interval. Usually, in known processes, the aforesaid delivery cycle envisages a first delivery step, in which only the material of the outer shell is delivered, a second delivery step, in which the material of the outer shell and the material of the filling are delivered simultaneously, and a third delivery step, in which only the material of the outer shell is again delivered.

Machines of the type in question are normally used for producing filled confectionery products, for example pralines.

The European patent EP 4082352B1 filed in the name of the present applicant describes a machine of the type referred to at the start, which is provided with a cooling unit for cooling or refrigerating the first material contained in the first container.

The machine described in the above document is hence able to dispense cold fillings for the preparation of cold or frozen foodstuff products, for example ice-creams.

In this context, the object of the present invention is to provide a machine referred to at the start that will be versatile and will enable the production of foodstuff products of multiple types.

The object referred to above is achieved via a machine having the characteristics specified in claim 1.

The claims form an integral part of the technical teaching provided herein.

Further characteristics and advantages of the invention will emerge clearly from the ensuing description with reference to the annexed drawings, which are provided purely by way of non-limiting example and in which:

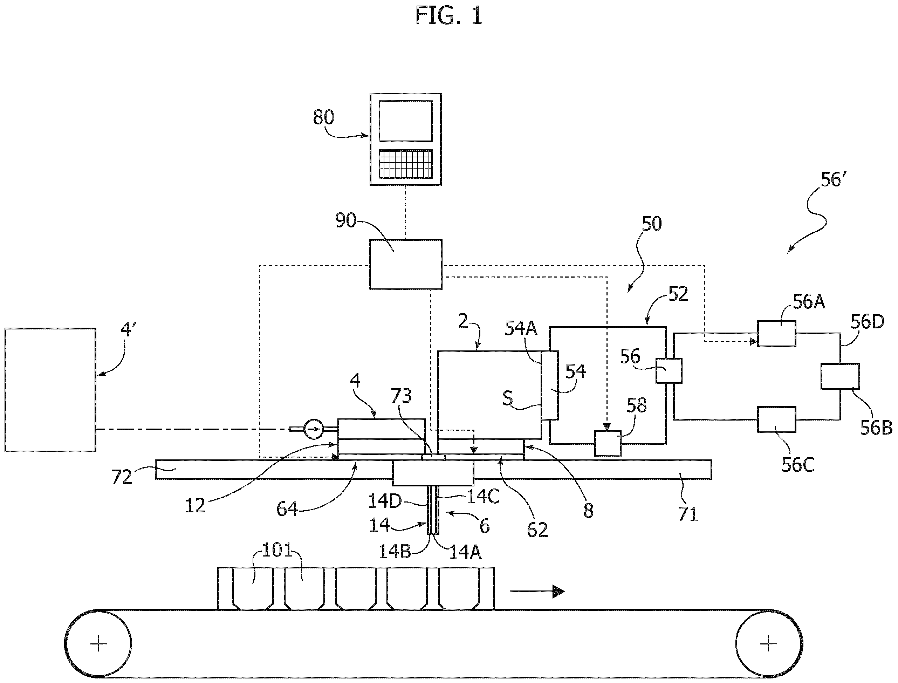

- Figure 1 is a schematic illustration of an example of machine for producing filled foodstuff products according to the present invention;

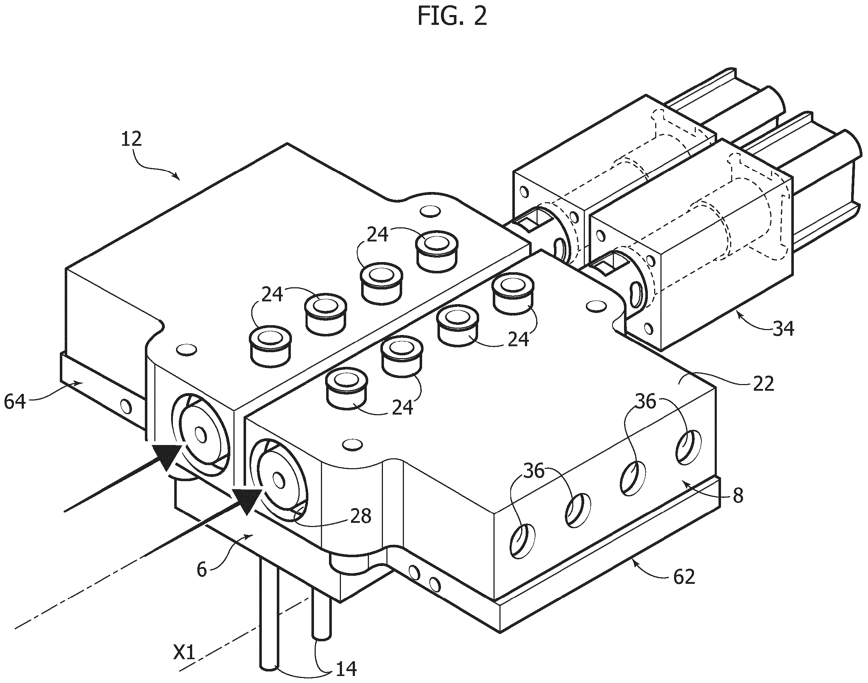

- Figure 2 represents two valve units and respective heating units of the machine of Figure 1, according to an axonometric view; and

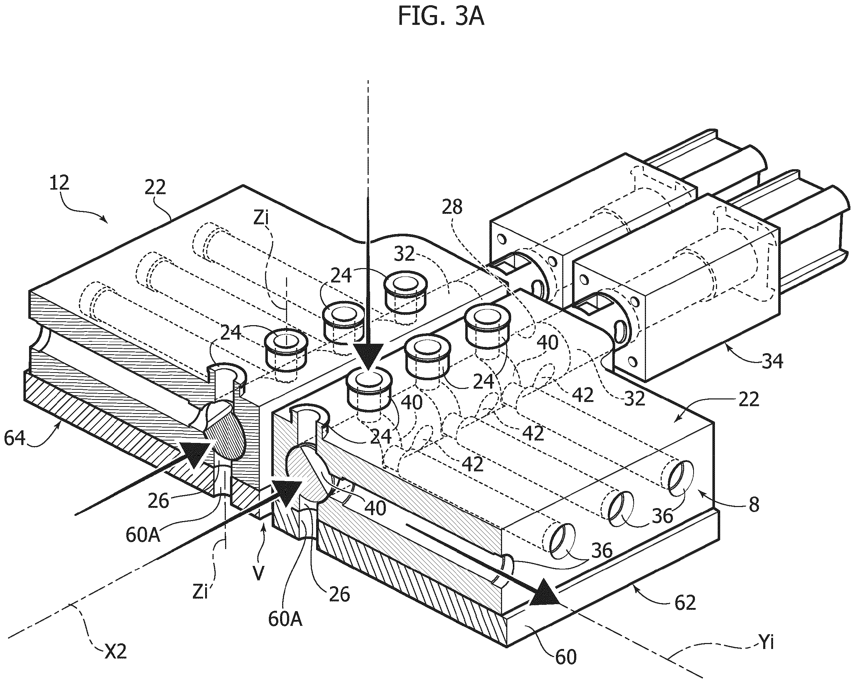

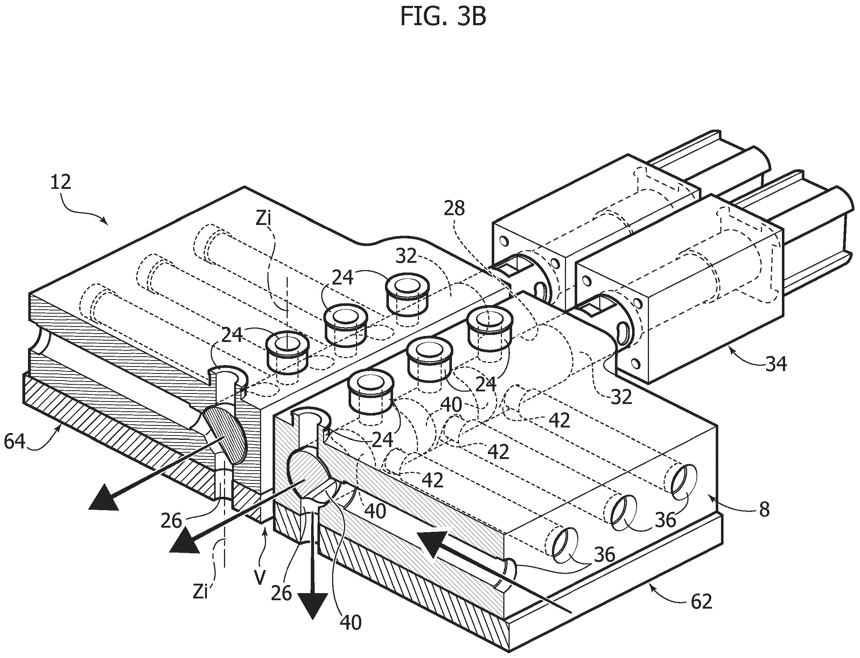

- Figures 3A and 3B are cross-sectional views of the valve units and of the heating units of Figure 2, in two respective different operating conditions.

In the ensuing description various specific details are illustrated in order to enable an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided only for convenience and hence do not define the sphere of protection or the scope of the embodiments.

With reference to the figures, the machine described herein, designated as a whole by the reference number 10, comprises:
- a first container 2 for receiving a first foodstuff material;
- a second container for receiving a second foodstuff material, or else a connection unit 4 for connecting a second container 4', which contains the second material, to the machine;
- a dispensing unit 6, comprising at least one dispensing nozzle 14, wherein the dispensing nozzle comprises a first outlet 14A and a second outlet 14B, which is external to the first outlet 14A and surrounds it;
- a first valve unit 8, for controlling a flow of the first material to the first outlet 14A; and
- a second valve unit 12, for controlling a flow of the second material to the second outlet 14B.

In one or more preferred embodiments like the one illustrated, the nozzle 14 comprises a first, inner, tubular duct 14C and a second, outer, tubular duct 14D, which surrounds the first duct 14C. The bottom end of the first duct 14C defines the first outlet 14A, whilst the opening provided between the bottom end of the first duct 14C and the bottom end of the second duct 14D defines the second outlet 14B.

In one or more preferred embodiments, the dispensing unit 6 comprises a multiplicity of nozzles 14, preferably aligned in a direction X1. The number of nozzles 14 of the series may clearly vary according to the requirements of the specific applications.

In one or more preferred embodiments like the one illustrated, each of the two valve units 8, 12 comprises an external valve body 22, which defines, at the top, a series of openings 24 and, at the bottom, a series of openings 26 aligned with the openings 24, vertically, in respective directions Zi.

The number of the openings 24, 26 is equal to the number of nozzles 14. Preferably, the two series of openings 24, 26 extend in a direction X2, parallel to the direction X1.

Inside the body 22, between the openings 24 and the openings 26, a cylindrical seat 28 is provided, mounted mobile in which is an open/close member 32 of corresponding shape. In particular, the seat 28 extends in the same direction X2 as that in which the two series of the openings 24 and 26 extend.

The open/close member 32 is axially mobile, in translation, in the same direction X2, driven by a linear actuator 34.

Moreover, the valve body 22 has a series of cylindrical chambers 36 that extend horizontally in respective directions Yi, orthogonal to the directions X1, X2, and each give out into the cylindrical seat 28, in a respective position in which a pair of the openings 24 and 26 is located.

Set in each chamber 36 is a piston (not illustrated), which is mobile in the direction Yi according to a reciprocating motion of translation, as will be seen in what follows.

The open/close member 32 has on its outer surface a series of pairs of grooves 40, 42, each located in a position corresponding to a respective pair of the openings 24, 26.

With specific reference to a pair of grooves 40, 42, the groove 40 is to set the opening 24 in communication with the collection chamber 36, whereas the groove 42 is to set the collection chamber 36 in communication with the opening 26.

Preferably, the grooves 40, 42 have a limited depth that never reaches the geometrical axis of the open/close member 32. Once again preferably, the grooves 40, 42 are obtained via milling in a cutting plane secant with respect to the circular profile of the cross section of the member 32.

In one or more preferred embodiments like the one illustrated, the grooves 40, 42 have two different orientations about the geometrical axis of the open/close member 32, preferably offset by approximately 90° with respect to one another. It will be noted that in the configuration illustrated the cutting plane by which each of the two grooves 40, 42 is defined is inclined by 45° with respect to the horizontal axis of the corresponding chamber 36 (i.e., with respect to the direction Yi in which said chamber extends).

Operation of each of the two valve units 8 and 12 hence envisages setting the open/close member 32 in a first position in which the grooves 40 are brought into a position corresponding to the openings 24, thus setting the latter in communication with the collection chambers 36.

At this point, the pistons inside the chambers 36 perform a stroke in the direction away from the open/close member 32 to draw in the material contained in the container 2 or 4 and deliver it into the chambers 36 themselves. Incidentally, it will hence be noted that the openings 24 operate as openings for entry of the material into the valve unit.

Next, the open/close member 32 is shifted into a second position in which the grooves 42 are brought into a position corresponding to the openings 26, thus setting the latter in fluid communication with the collection chambers 36.

Then, the pistons are again driven in a stroke in the direction opposite to the previous one, towards the open/close member 32, to push the material out of the collection chambers 36 and send it to the nozzles 14 of the dispensing unit 6. Incidentally, it will hence be noted that the openings 26 operate as outlets for the material from the valve unit.

The first valve unit 8 operates in the way described above to take in the first material contained in the container 2 and feed it to the outlets 14A of the nozzles 14.

On the other hand, the second valve unit 12 operates to take in the second material contained in the container 4 and feed it to the outlets 14B of the nozzles 14.

In one or more preferred embodiments, the dispensing operation carried out by the machine envisages a dispensing cycle in which both of the materials contained in the two containers 2 and 4 are delivered.

In particular, in one or more preferred embodiments, the above dispensing cycle comprises a first step in which only the first material is delivered through the individual nozzle 14, a second subsequent step in which the two materials are delivered simultaneously, and finally a last step in which only the first material is again delivered.

In this way, a product is obtained having an outer shell formed by the first material and an internal filling formed by the second material.

The machine 10 comprises a control unit 90 configured for governing the actuators 34 of the two valve units 8, 12 in a synchronized way to implement the dispensing process described above.

Usually, the dispensing process described above is obtained within a cavity 101 of a mould that bestows a given shape upon the product.

Preferably, the machine 10 is configured to move the dispensing unit 6 vertically during the dispensing step.

In particular, before starting the dispensing cycle, the dispensing unit 6 is brought into a lowered position where the nozzles 14 are set within the cavity of the mould and up against the corresponding bottom.

When the dispensing cycle is started and during the same cycle, the dispensing unit 6 is raised gradually, following the rate of filling of the cavity of the mould.

According to an important characteristic of the present invention, the machine 10 comprises a thermal-conditioning system 50 for selectively cooling or else heating an inner surface S of the first container 2 so as to cool or heat the first material contained in the container itself. In other words, the thermal-conditioning system 50 is able to operate both for cooling the inner surface S of the first container 2, so as to cool the first material contained in the container itself, and for heating the same inner surface S of the first container 2, so as to heat the first material contained in the container itself. These two operating modes are implemented by the thermal-conditioning system 50 alternatively, in a selective way (i.e., one mode of the two modes in question is selected), for example according to the type of the product to be obtained, as will be seen in greater detail in what follows.

In one or more preferred embodiments like the one illustrated, the thermal-conditioning system 50 comprises a hydraulic circuit 52 in which a thermal-conditioning fluid flows, a heat-exchange unit 54, which is connected to the circuit 52 for being traversed by the thermal-conditioning fluid and is configured for setting the thermal-conditioning fluid in a condition of heat exchange with the inner surface S of the first container 2, a cooling unit 56 for cooling the thermal-conditioning fluid, and a heating unit 58 for heating the thermal-conditioning fluid.

In one or more preferred embodiments like the one illustrated, the control unit 90 of the machine is configured for governing selectively activation of the cooling unit 56 or else activation of the heating unit 58 as a function of a signal indicating the type of product to be obtained.

In view of the foregoing, it will hence be understood that the machine described herein is able to produce indifferently products with cold fillings or else hot fillings (at least with reference to the respective production process), by simply varying the operating settings of the machine.

In one or more preferred embodiments like the one illustrated, the machine comprises an operator interface 80 via which an operator can select the type of product to be obtained and which is operatively connected to the control unit 90 for transmitting to the latter a signal indicating the type of product selected by the operator.

Consequently, if the operator selects a type of product that envisages a hot filling (at least with reference to the respective production process), the control unit 90 governs activation of the heating unit 58 so that, during operation of the machine, the thermal-conditioning fluid is heated and this in turn heats, through the heat-exchange unit 54, the inner surface S of the container 2. The material contained in the container 2 will hence be heated by the inner surface S of the container 2.

If, instead, the operator selects a type of product that envisages a cold filling (at least with reference to the respective production process), the control unit 90 governs activation of the cooling unit 56 so that the thermal-conditioning fluid is cooled by the cooling unit 56 and the thermal-conditioning fluid itself in turn cools the inner surface S of the container 2 through the heat-exchange unit 54. In this case, the material contained in the container 2 will hence be cooled by the inner surface S of the container 2.

The heat-exchange unit 54 may be of any known type commonly used in the sector of production of foodstuff products.

For instance, the heat-exchange unit 54 may comprise one or more internal ducts for the passage of the thermal-conditioning fluid, which are connected to the circuit 52 and are set in a condition of heat exchange with an outer wall 54A of the heat-exchange unit 54 itself.

Via its outer wall 54A, the heat-exchange unit 54 is set in direct contact with the wall of the container 2 defining the inner surface S.

In one or more alternative embodiments, the heat-exchange unit 54 may instead be associated to the container 2 so that it is the outer wall 54A itself that defines the inner surface S of the container 2.

The thermal-conditioning fluid may be of any known type commonly used in the sector of production of foodstuff products. For instance, the thermal-conditioning fluid may be constituted by a mixture of water and glycol. Alternatively, the thermal-conditioning fluid may be air.

The heating unit 58 may be of any known type commonly used in the sector of production of foodstuff products. For instance, the heating unit 58 may be a heating device operating via electrical resistance or else electromagnetic-induction means.

The cooling unit may itself also be of any known type commonly used in the sector of production of foodstuff products.

In one or more preferred embodiments like the one illustrated, the cooling unit 56 may be the evaporator module of a refrigerating system 56' that comprises a circuit 56D, in which a refrigerant fluid flows (for example, a refrigerant gas, such as R452A), and further comprising a compressor 56A, a condenser 56B, and a lamination valve 56C. The system 56' is configured for subjecting the circulating fluid to a refrigerating cycle in which the evaporator module operates as cooling unit of the system 50.

The person skilled in the sector will understand that, in this case, the control unit 90 is configured for governing activation of the entire refrigerating system 56' - for example by governing activation of the compressor 56A - so as to render the evaporator unit operative as cooling unit of the circuit 52.

In an alternative embodiment, the cooling unit 56 is instead a Peltier-cell cooling unit.

In one or more preferred embodiments like the one illustrated, the machine 10 further comprises a heating unit 62 for heating the valve unit 8, and a heating unit 64 for heating the valve unit 12.

In one or more preferred embodiments like the one illustrated, the control unit 90 is configured for governing activation of the heating unit 62 as a function of the signal, referred to above, indicating the type of product to be obtained.

Consequently, if the operator selects a type of product with hot filling, the control unit 90 governs activation of the heating unit 62 so that this will heat the valve unit 8, in particular its external valve body 22, which, as has been seen above, contains within it the collection chambers 26 that are to receive the first material from the container 2.

As a result of heating of the valve body 22 obtained via the heating unit 62, the first material, which is kept hot by the thermal-conditioning system 50 when it is inside the container 2, does not undergo any substantial lowering of temperature at the moment when it is introduced into the valve unit 8 then to be delivered by the dispensing unit 6.

The heating unit 64 carries out exactly the same function for the valve unit 12.

In one or more preferred embodiments like the one illustrated, each of the two heating units 62, 64 is a heating plate 60 that is set in contact with the bottom side of the valve body 22 and has a series of openings 60A arranged aligned with the series of openings 26 made on the bottom side itself of the valve body 22.

The through openings 60A set the series of openings 26 of the valve body 22 in fluid communication with the respective nozzles 14, notwithstanding interposition of the heating plate 60.

Preferably, the two heating plates 62 and 64 operate via electrical resistance or else electromagnetic-induction means.

In a preferred embodiment like the one illustrated, the heating plate 62 and the heating plate 64 are set at a distance apart in a direction parallel to the directions Yi and are separated from one another by way of an interstitial space V that is preferably empty.

It will be noted that in this way, when the machine operates for producing a product with a cold filling and the heating plate 62 is hence not active, the interstitial space V prevents the heating plate 62 from being in any case heated indirectly, by conduction, by the heating plate 64, which is instead active for heating the valve unit 12 that is to draw in the second material from the container 4'.

In alternative embodiments, the machine may instead envisage inserted in the space V thermally insulating material, for example a sheet of expanded polypropylene, extruded polystyrene, Delrin (POM-C), or else Teflon (PTFE).

In one or more preferred embodiments like the one illustrated, the valve unit 8 and the valve unit 12, together with the respective heating units 62, 64 associated thereto, are carried by two respective supports 71, 72, from which they project in cantilever fashion in a direction parallel to the directions Yi.

The dispensing unit 6 is mounted on the bottom faces of the respective portions projecting in cantilever fashion of the two heating units 62, 64, and is received in a space comprised between the two supports 71, 72.

The two supports 71, 72 form part of a vertically mobile frame of the machine 10, which is designed to bring about the movement of raising referred to above of the dispensing unit 6, envisaged during the cycle of dispensing of the two materials.

Considering the cyclical movement to which the two valve units 8, 12 and the respective heating unit associated thereto are subjected, and the vibrational stresses deriving from this movement, preferably the machine 10 comprises at least one stiffening element 73, made of a non-thermally conductive material, which connects together the two valve units 8 and 12 or else the two heating units 62 and 64 in order to stiffen the structure of this part of the machine.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A machine for producing a filled foodstuff product, comprising:
- a first container (2) for receiving a first foodstuff material;
- a second container (4) for receiving a second foodstuff material, or else a connection unit for connecting a second container, containing the second material, to the machine;
- a dispensing unit (6) comprising at least one dispensing nozzle (14), wherein the dispensing nozzle comprises a first outlet (14A) and a second outlet (14B), which is external to the first outlet (14A) and surrounds it;
- at least one valve unit (8, 12) for controlling a flow of the first material to the first outlet (14A) and a flow of the second material to the second outlet (14B); and
- a control unit (90) for governing the at least one valve unit (8, 12) so as to generate, either individually or simultaneously, a flow of material through the first outlet (14A) and a flow of material through the second outlet (14B),
the machine being **characterized in that** it comprises a thermal-conditioning system (50) for cooling or heating, selectively, an inner surface (S) of the first container (2) so as to cool or heat the first material contained in the first container.

2. The machine according to claim 1, wherein said thermal-conditioning system (50) comprises a circuit (52) in which a thermal-conditioning fluid flows, a heat-exchange unit (54), which is connected to the circuit for being traversed by the thermal-conditioning fluid and is configured for setting the thermal-conditioning fluid in a condition of heat exchange with the inner surface (S) of the first container (2), a cooling unit (56) for cooling the thermal-conditioning fluid, and a heating unit (58) for heating the thermal-conditioning fluid.

3. The machine according to claim 2, wherein said control unit (90) is configured for governing selectively activation of said cooling unit (56) or of said heating unit (58) as a function of a signal indicating the type of product to be produced.

4. The machine according to claim 2 or claim 3, comprising a refrigerating system (56'), in which a refrigerant fluid flows and which is configured for subjecting said refrigerant fluid to a refrigerating cycle, wherein said refrigerating system (56') comprises an evaporator module (56) constituting said cooling unit (56) .

5. The machine according to claim 2 or claim 3, wherein said cooling unit (56) is a Peltier-cell thermoelectric device.

6. The machine according to claim 2 or claim 3, wherein said heating unit (58) is a heating device operating with electrical resistance.

7. The machine according to any one of the preceding claims, comprising:
- a first valve unit (8) for controlling a flow of the first material to the first outlet (14A) of the dispensing nozzle (6);
- a second valve unit (12) for controlling a flow of the second material to the second outlet (14B) of the dispensing nozzle (6);
- a second heating unit (62) for heating the first valve unit (8); and
- a third heating unit (64) for heating the second valve unit (12).

8. The machine according to claim 7, wherein said control unit (90) is configured for governing activation of said second heating unit (62) as a function of said signal indicating the type of product to be produced.

9. The machine according to claim 7 or claim 8, wherein:
- each of said first and second valve units (8, 12) comprises an external valve body (22) defining at least one chamber (36) for collecting the first or second material, which extends in a reference direction (Yi), and a piston mobile within the collection chamber (36) in the same direction, in a first sense for suctioning the first or second material from the first or second container and delivering it to the collection chamber (36) and in a second, opposite, sense for conveying the first or second material from the collection chamber (36) to the first or second outlet (14A, 14B) of the dispensing nozzle (14), wherein said valve body (22) has, on a side thereof, preferably the bottom side, at least one opening (26) that sets the collection chamber (36) in fluid communication with the first or second outlet (14A, 14B) of the dispensing nozzle (14);
- the second heating unit (62) comprises a heating plate (60), which is set in a condition of heat exchange with the valve body (22) of the first valve unit and has a through opening (60A) that sets said opening of said valve body (22) in fluid communication with the first outlet (14A) of the dispensing nozzle (14); and
- the third heating unit (64) comprises a heating plate (60), which is set in a condition of heat exchange with the valve body (22) of the second valve unit and has a through opening (60A) that sets said opening of said valve body (22) in fluid communication with the second outlet (14A) of the dispensing nozzle (14).

10. The machine according to claim 9, wherein the heating plate of the second heating unit (62) and the heating plate of the third heating unit (64) are set at a distance apart in a direction parallel to the reference direction (Yi) and are separated by a preferably empty interstitial space (V) so that, when the control unit (90) does not activate the second heating unit (62) on the basis of the signal indicating the type of product to be produced, the heating plate of the second heating unit (62) will not be heated by conduction by the heating plate of the third heating unit (64).

11. The machine according to claim 10, wherein inserted in said interstitial space (V) is a thermally insulating material, for example a sheet of expanded polypropylene, extruded polystyrene, Delrin (POM-C), or else Teflon (PTFE).
